(19) Europäisches Patentamt
European Patent Office
Office européen des brevets

(11) EP 2 385 615 A1

(12) EUROPEAN PATENT APPLICATION

(43) Date of publication:
09.11.2011 Bulletin 2011/45

(51) Int Cl.:
H02M 3/07 (2006.01)

(21) Application number: 10162204.1

(22) Date of filing: 06.05.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(71) Applicant: NXP B.V.
5656 AG Eindhoven (NL)

(72) Inventor: Villar Pique, Gerard
Redhill, Surrey RH1 1DL (GB)

(74) Representative: Ashton, Gareth Mark
NXP Semiconductors
Intellectual Property Department
Betchworth House
67-65 Station Road
Redhill, Surrey RH1 1DL (GB)

(54) **Voltage Converter**

(57) A voltage converter comprises at least two capacitive stages, each comprising at least a capacitor and a charging switch through which a capacitor charging current is adapted to flow, and a control circuit for controlling the charging switches. The voltage converter comprises a feedback control system for maintaining a desired output voltage, wherein the feedback control system controls the switch control voltage of at least one of the charging switches thereby to vary the series resistance of the switch when turned on.

This arrangement reduces the switching power losses whilst providing output regulation. Thus, conduction power losses (i.e. high series resistances of the switches) are deliberately increased when they are required for output voltage regulation, and they are reduced when not required for output voltage regulation.

FIG. 5

**Description**

The invention relates to a voltage converter for converting an input voltage to an output voltage.

In present IC-technologies, there is a strong drive to improve the efficiency of the power systems, in order to obtain the maximum operation time out of one or more batteries.

The voltage generated by the battery is often not at the required level, so a voltage to voltage conversion is needed. To minimise losses, this conversion (either up or down) is mostly done by means of a switched-mode DC/DC converter. Either a coil or a set of capacitors can be used.

This invention relates particularly to a DC/DC converter using capacitors as the conversion mechanism.

A capacitive voltage up-converter uses a charge pump operation. A voltage converter may have several charge pump stages arranged in cascade. A charge storage element of the first stage is charged upon a switching event of a driver driving the first stage. A further switching element at the output of the first stage (which may be the input to the next stage) is open in this case.

The output switching element is then closed so that the charge may be supplied to the next stage. The charge storage element of the subsequent stage is then charged upon a switching event of a driver driving the subsequent stage. Thus, a charge stored in the first stage is forwarded to one or more subsequent stages, where it is added to the charge of such a subsequent stage, so that a higher voltage is generated and can be provided to a device.

A capacitive voltage down-converter also uses a series of capacitors. Charge is transferred or shared between capacitors in order to implement a change in voltage.

One of the particularities of switched-capacitor converters is that, in order to provide a regulated output voltage, they require of certain value of the output impedance ($R_{out}$). This is the main cause of their lower efficiency when compared to inductive converters (where the output voltage is commonly set by the duty-cycle of the clock signal).

The power efficiency of switched capacitor converters becomes severely reduced when output voltage regulation is needed but no switching frequency modulation is allowed (due to the generated interferences to the surrounding systems). The reason for this is that when the output power level is reduced the switching losses remain constant because the switching frequency needs to be constant.

According to the invention, there is provided a voltage converter comprising at least two capacitive stages, each comprising a capacitor and a charging switch through which a capacitor charging current is adapted to flow, and a control circuit for controlling the charging switches,
wherein the voltage converter comprises a feedback control system for maintaining a desired output voltage, wherein the feedback control system controls the switch control voltage of at least one of the charging switches thereby to vary the series resistance of the switch when turned on.

This arrangement reduces the switching power losses whilst providing output regulation. Thus, conduction power losses (i.e. high series resistances of the switches) are deliberately increased when they are required for output voltage regulation, and they are reduced when not required for output voltage regulation.

The charging switches can each comprise a transistor, and the switch control voltage then comprises the gate voltage. The gate voltage (and particularly the gate-source voltage) determines the transistor operating point and therefore the series resistance.

The invention is not limited to a specific kind or topology of switched-capacitor converter, but provides an arrangement (and control method) to regulate the output voltage. This arrangement and method is based on the observation of the output voltage and the change of the voltage applied to the gate of at least one switching transistor, so that the on-resistance is modified to adjust the output voltage.

The feedback control system can comprise a voltage generator for generating at least two voltage rails, and a driver circuit for generating switching gate voltages from the two voltage rails, wherein the at least two voltage rails are controlled in dependence on the output voltage. This provides a simple feedback control system which only needs to control the voltage rails. Furthermore, only one of the voltage rails may need adjustment.

A logic circuit is preferably provided for controlling which switching gate voltages are applied to the charging switches. Clock signals can be applied to corresponding drivers of the charging switches for this purpose (for example in the case of a configurable switched-capacitor converter with different conversion ratios).

The voltage can be applied to a charge pump voltage up-converter or to a voltage down-converter.

The invention also provides a method of converting an input voltage to an output voltage using a voltage converter which comprises at least two capacitive stages, each comprising a capacitor and a charging switch through which a capacitor charging current is adapted to flow, and a control circuit for controlling the charging switches,
wherein the method comprises maintaining a desired output voltage using a feedback control system which controls the switch control voltage of at least one of the charging switches thereby to vary the series resistance of the switch when turned on.

Preferred embodiments of the invention will now be described in a detailed description with reference to the accompanying drawings, in which:

Figure 1 shows a schematic (known) switched capacitor charge pump architecture;
Figure 2 shows the general equivalent circuit of the switched capacitor circuit;
Figure 3 shows one known way to provide output voltage regulation;
Figure 4 shows a first example of voltage converter architecture of the invention;
Figure 5 shows the voltage converter architecture of Figure 4 in more detail;
Figure 6 shows a circuit for generating turn on voltages for NMOS and PMOS transistors;
Figure 7 shows the performance of the circuit of Figure 5;
Figure 8 shows the performance of the known circuit of Figure 3;
Figure 9 shows how the efficiency is improved by the invention; and
Figure 10 shows a first example of voltage converter architecture of the invention when combined with more conventional approaches.

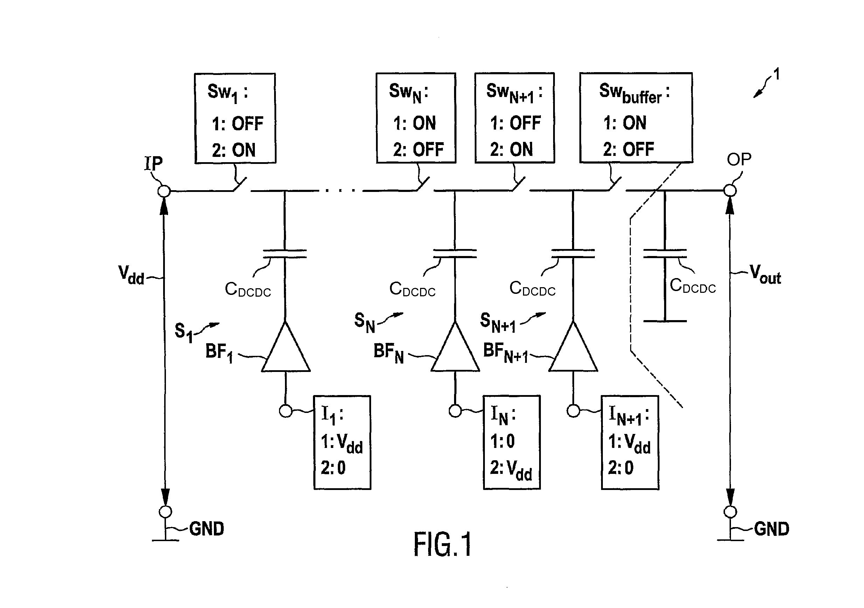

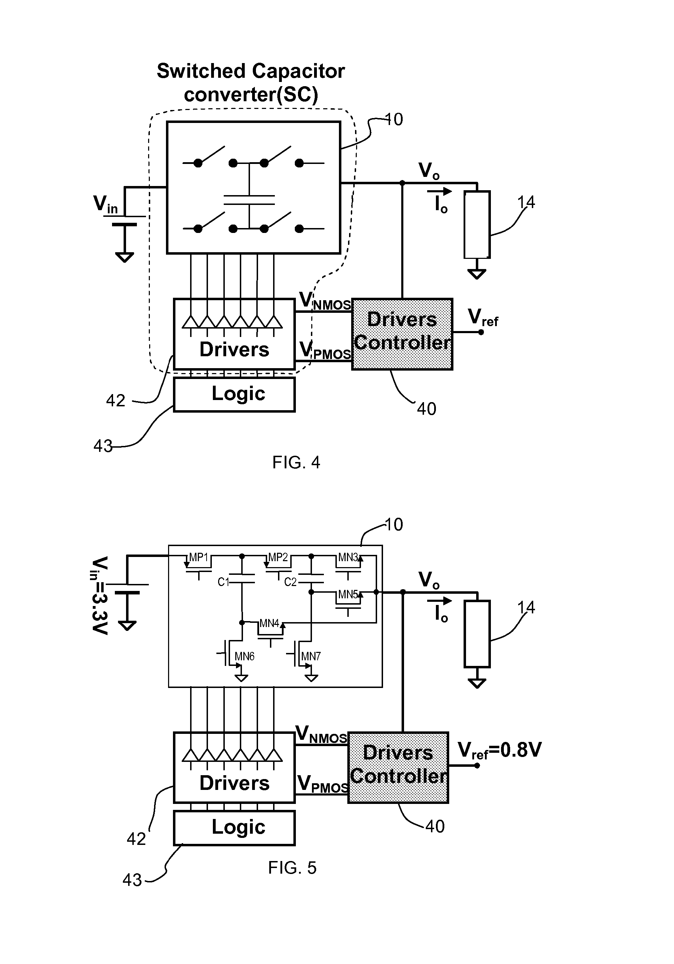

Figure 1 shows a programmable charge pump to which the invention can be applied. Figure 1 is based on a voltage up-converter. However, the same principles apply to a voltage down-converter, and indeed Figure 5 shows components of a voltage down-converter.

In Figure 1, the programmable charge pump 1 has a series of stages $S_1$... $S_N$, $S_{N+1}$ etc. each containing a capacitor $C_{DCDC}$ as a charge storage element, a MOSFET as a switch $Sw_1$... $Sw_N$, $Sw_{N+1}$ etc. and a bottom plate driver as a switching means (not shown). Each respective charge pump further comprises a buffer $BF_1$... $BF_N$, $BF_{N+1}$ etc. with an input $I_1$ ... $I_N$, $I_{N+1}$ etc. for receiving a clock input signal and a voltage Vdd as indicated in the Figure.

An input voltage Vdd is generated by a voltage source between the input terminal IP and the ground terminal GND and is supplied to the charge pump device 1. The stages are connected in a cascade, one after each other. With every stage, one input supply voltage Vdd may be gained. This is true for the ideal situation of no output current. The clock may also be generated adaptively with several phases. The ideal situation has to be corrected as there are internal losses, these losses being mainly due to dissipated currents by switch resistances when in an "on" position and one or more bottom plate drivers.

A single or a plurality of bottom plate drivers are capable of actuating each of the charge pumps and in particular by operating the input terminals IP, $I_1$ $I_N$, $I_{N+1}$ etc. and the switches $Sw_1$... $Sw_N$, $Sw_{N+1}$ etc. The voltages applied to the lower capacitor electrodes are thus controlled as well as the timing of the switching.

In the simplest implementation, there are only two states, "1" and "2", which alternate, in order to provide passing of charge along the charge pump circuit. In the output stage, the output voltage Vout is generated between the output terminal OP and the ground terminal GND.

The stages in Figure 1 and the sizing thereof are identical to each other in their construction. However, this is not the optimal case and has been chosen only to illustrate a simple design (with the advantage of a short design time). Further developed voltage converter embodiments may preferably be designed in a different way. In particular, stages S1, S2... $S_N$ close to the voltage booster input may have a stronger layout than the stages closer to the output.

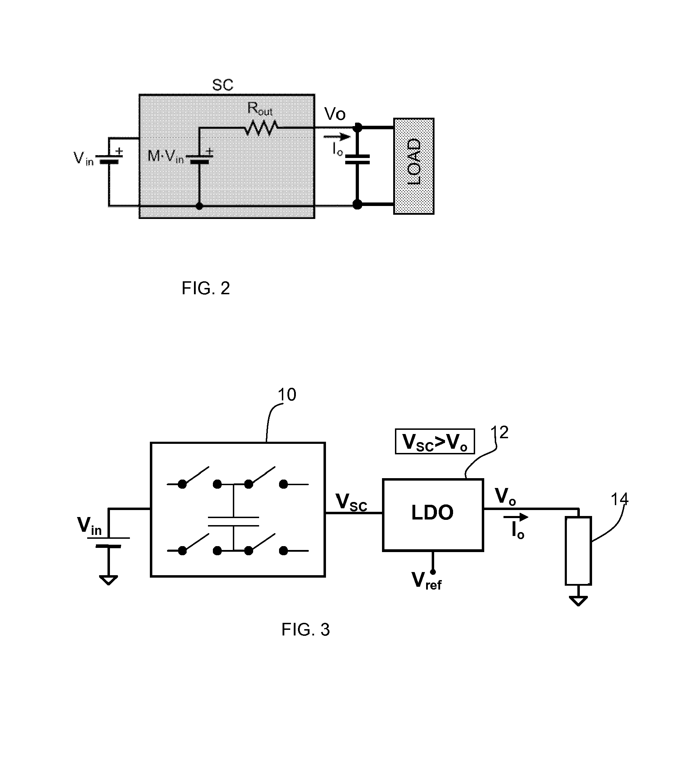

A switched-capacitor converter (whether an up-converter or a down-converter) can be very simply modelled by an ideal voltage source (with the value of the input voltage multiplied by the conversion ratio of the implemented topology, $M \cdot V_{in}$) plus a series connected output impedance (Rout), whose value depends on the value of the floating capacitors C, the switching frequency $f_s$ and the on-resistance $R_{on}$ of the switches. The equivalent circuit according to this model is shown in Figure 2.

A switched-capacitor converter produces conduction losses in order to regulate the output voltage, by means of the modulation of the output impedance. That is the reason for the maximum theoretical efficiency η to be lower than 100% in switched-capacitor converters, as shown in expression (1) below:

$$\eta = \frac{V_o}{MV_{in}} \qquad (1)$$

The unavoidable conduction losses are:

$$P_{cond} = \left(MV_{in} - V_o\right)I_o \qquad (2)$$

However, in general even the maximum theoretical efficiency can not be reached because of additional switching losses mainly due to the so called bottom-plate parasitic capacitance of the capacitors (especially important in the case of integrated planar capacitors), as well as due to the energy spent by the drivers used to act on the power switches.

Thus, since the conduction losses are needed to provide the desired output voltage regulation, the optimum efficiency can only be obtained by the minimization of the switching losses.

It is well known to design a switched capacitor converter with the maximum required current capability, thereby providing an output voltage high enough to allow the series connection of a low drop out (LDO) regulator for DC linear voltage regulation, as shown in Figure 3. The LDO 12 is between the switched capacitor converter 10 and the output load 14.

The main function of the LDO is to provide fine output voltage regulation to compensate for input voltage and load current changes, and output voltage ripple attenuation. This approach of using a switched mode power converter (the switched capacitor converter) plus a continuous time regulator (the LDO) is commonly referred as a "hybrid converter".

The main drawback of such an approach is the need for a higher output voltage of the switched-capacitor circuit ($V_{sc}$ in Figure 3), which requires larger capacitors or switches, or higher switching frequency (or a combination) resulting in higher switching losses, lower efficiency and larger required area.

Hoi Lee; Mok, P.K.T.; A SC DC-DC converter with pseudo-continuous output regulation using a three-stage switchable opamp; Solid-State Circuits Conference, 2005. Digest of Technical Papers. ISSCC. 2005 IEEE International 10 Feb. 2005 Page(s):288 - 599 Vol. 1 discloses an arrangement in which the functionality of the LDO can be embedded into the switched capacitor converter itself by using two of the power switches as pseudo-continuous time regulators. This provides a slight reduction of switching losses, but the rest of the power transistors are supplied with the full voltage supply, which prevents further reduction in the switching losses.

One known way to provide regulation without unnecessary increased switching losses is by means of variation of the switching frequency, but this is undesirable in many applications, for example because of the uncontrolled spectrum of the generated interference that may impact on the surrounding circuits.

The invention provides an arrangement in which the output impedance of the switched-capacitor converter is modified by varying the impedance of the switches without modulating the switching frequency. In this way, when a higher output impedance is needed because of a lower current or a higher input voltage, the voltage applied to the gates of the NMOS switches is reduced to increase their resistance (and reduce the gate-to-source voltage); and the gate voltage of the PMOS switches is increased to increase their resistance (and reduce their source-to-gate voltage). The main benefit of this is the reduction of the switching losses at the power drivers, because of the quadratic relationship between the voltage supply and the power dissipated.

Figure 4 shows a block diagram of the circuit of the invention. A controller circuit 40 senses the output voltage $V_o$ of the switched capacitor converter 10 and acts on the supply voltage rails of the drivers 42, to control the resistance of the switches and as a result adjust the output voltage.

By adjusting the supply voltage rails, the gate voltages generated by the drivers 42 are varied. A logic unit 43 controls which clock signals are applied to the different drivers of the switches of the circuit, in known manner.

As an embodiment example and as shown in Figure 5, the driver supply control is applied to a switched capacitor converter 10 with a conversion ratio of M=1/3, with an input voltage of $V_{in}$=3.3V and output voltage of $V_o$=0.8V. In this example application, the switching frequency can not be used to regulate the output voltage (which is a realistic scenario in many applications).

The circuit comprises a first stage with an input switch MP1 and a first capacitor C1 connected to ground through switch MN6 and connected to the output through switch MN4. A second stage has an input switch MP2 and a second capacitor C2 connected to ground through switch MN7 and connected to the output through switch MN5. An output switch MN3 from the second stage connects to the output.

In a first phase, the first capacitor C1 is connected between Vin and Vout (MP1 closed, MN4 closed, MN6 open, MP2 open) and the capacitor C1 is charged to 2/3 of the input voltage. The second capacitor C2 is connected between the Vo and GND (MN7 closed, MN3 closed, MN5 open), and charged to Vo (equal to 1/3 of Vin). In the second phase, the capacitors C1 and C2 are series connected between Vo and GND (MN6 closed, MP2 closed, MN5 closed, MP1 open, MN3 open, MN4 open, MN7 open). This operation produces an output voltage equal to 1/3 of Vin.

The invention does not relate to the specific switched capacitor circuit, and many different known circuits exist, which use different configurations of capacitors to implement a voltage up-conversion or a voltage down-conversion. The invention relates to the control of the series resistance of one or more transistors within the circuit to control the effective load, and can be applied to all switched capacitor circuits having transistors which have a resistance which can be considered to contribute to the output load.

This invention proposes a control method that adjusts the voltage applied to the gates of the switches in their ON state so that the output voltage is equal to the specified Vref.

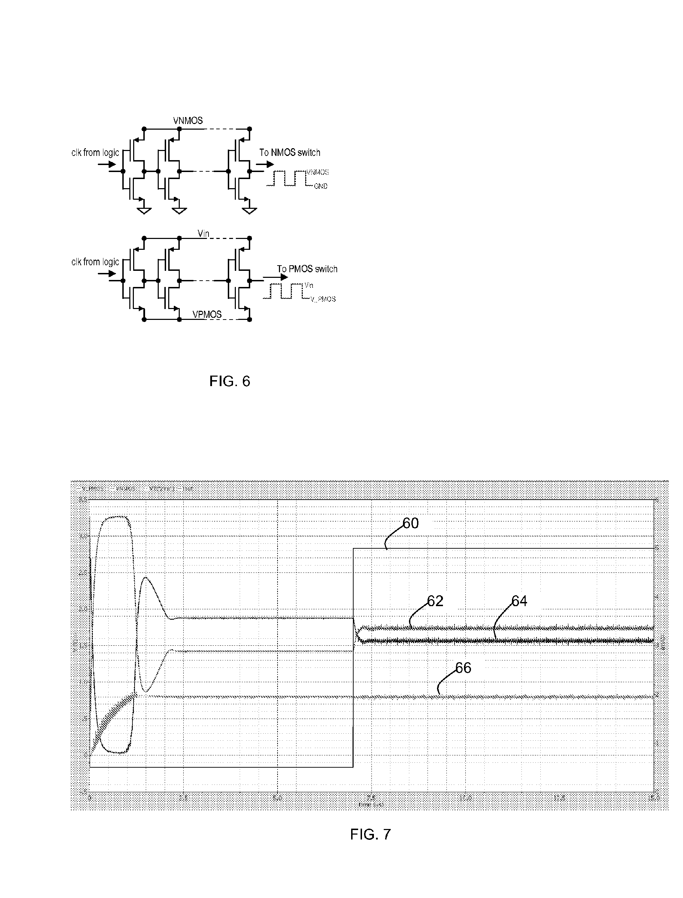

Figure 6 shows a typical example of how to apply the voltages generated by the controller to the supply of the drivers, depending on whether they drive PMOS or NMOS switches.

The generated gate voltages are preferably applied to all the drivers, grouped by the ones corresponding to transistors of the same type (PMOS or NMOS). In the example of Figures 5 and 6, a voltage VNMOS is generated for the ON state of the NMOS switches (which is applied to the NMOS switch drivers as shown in Figure 6); and a different voltage VPMOS is generated to be applied to the ON state of the PMOS switches (which is applied to the PMOS switch drivers as shown in Figure 6).

The generated voltages are the ON state voltages of the gates (applied through the drivers). As a consequence the gate-to-source (or source-to-gate) voltages will also change, resulting in the desired change of the on-resistance of the switches.

The controller generates only one of the supplies of the drivers (positive in case of NMOS switches, and negative in case of the PMOS switches). Thus, the drivers of the PMOS switches are supplied between Vin and VPMOS voltages, while the drivers of the NMOS switches are supplied between VNMOS and GND.

The simulation results of the implementation of Figure 5 are shown in Figure 7. The figure shows as plot 60 a step of the output current from $500\mu A$ to 5mA, and how the supply of the NMOS switches (plot 62) and the supply of the PMOS switches (plot 64) are adjusted to keep the output voltage (plot 66) constant and equal to 0.8V.

The MOS switch voltages are the gate voltages applied to the MOS switches to turn on the respective transistors. By varying the gate voltages, the effective transistor resistances are varied, which can thus be used to provide feedback control of the output voltage.

The feedback control involves detecting an unwanted change in Vo, and then iteratively controlling the gate voltages (i.e. stepping them up or down as required) to keep the output voltage Vo constant.

The output current step represents a change in the load conditions.

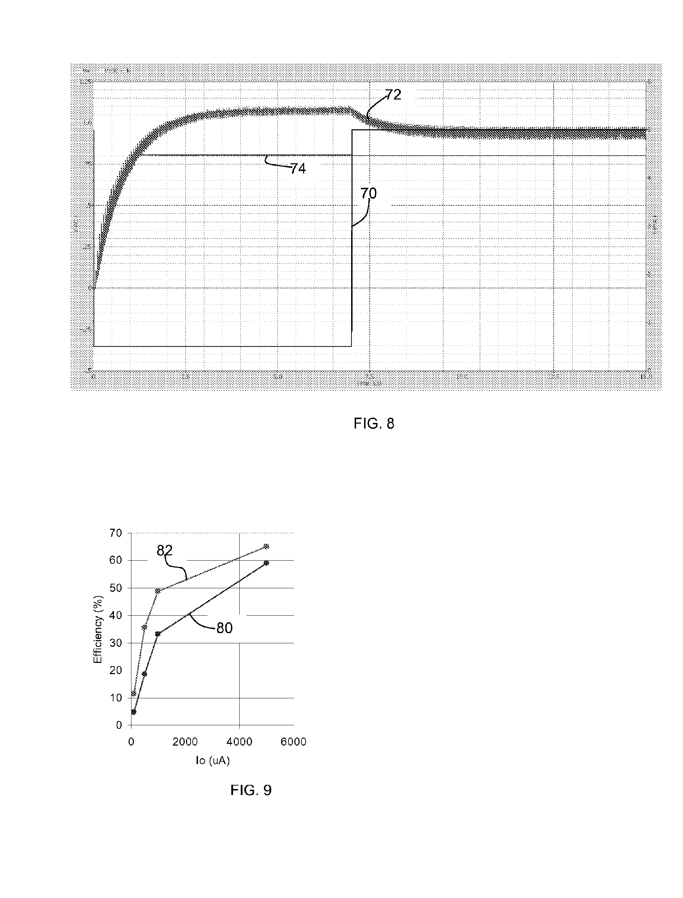

To compare the benefits of the proposed technique, the more conventional implementation of Figure 3 (switched-capacitor converter plus a series-connected LDO) has been also simulated, again with input voltage 3.3V and output voltage 0.8V. The corresponding results are shown in Figure 8. Again, an output current step (plot 70) was applied, and this is reflected in the output voltage of the switched-capacitor converter $V_{oSC}$ (plot 72), which shows the corresponding voltage drop due to the output impedance (which remains constant due to the constant switching frequency, on-resistance of the switches and capacitance of the capacitors).

However, the output voltage of the LDO $V_o$ (plot 74), which is needed to regulate the load voltage, remains constant all the time and therefore does not react to the change in load conditions.

The parameters of the switched capacitor converters used in both simulations are shown in the following table, with the channel width and length figures (W/L) for the transistors given in units of $\mu m$.

| $V_{in}$ | 3.3V | MP1 | 614.3/0.38 |
|---|---|---|---|
| $V_o$ | 0.8V | MP2 | 1449/0.38 |
| $C_{floating}$ | 357pF | MN3 | 709.6/0.38 |
| $C_{out}$ | 25n | MN4 | 680.8/0.38 |
| $f_s$ | 18.45MHz | MN5 | 517/0.38 |
| $C_{bottom}$ | 0 | MN6 | 393.7/0.38 |
| | | MN7 | 407.5/0.38 |

Since the output voltage of both examples is the same and the topologies of the SC converters are also the same (conversion ratio=1/3), the conduction losses will remain the same for both of them (see expression (2)). However, the switching losses are smaller in the proposed technique since the supply of the drivers is reduced to provide the higher impedance required in case of an output current drop (thereby reducing the switching losses); whereas in the second case the required higher impedance to keep the output voltage constant is provided by the LDO while the switched-capacitor still provides a too low impedance, at the expense of higher switching losses.

In Figure 9, the resulting efficiencies of both implementations as a function of the output current are compared. Plot 80 is for the known approach of Figure 3 and plot 82 is for the approach of the invention.

The efficiency improvement can be quite significant, though it will depend on the particular characteristics of the switched capacitor converter itself.

The technique of the invention can be combined with more conventional approaches in order to take advantage of the additional features of other solutions, and still improve the power efficiency.

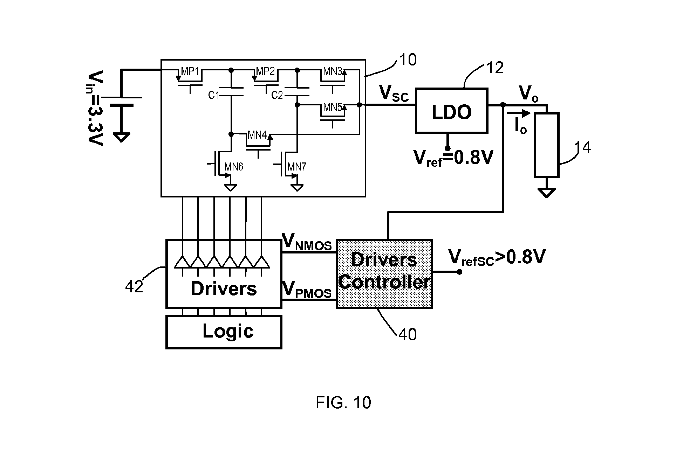

As an example, the circuits of Figures 3 and 5 and could be combined as shown in Figure 10, to improve the power efficiency and still get the reduction of the output ripple due to the action of the LDO. In this case, the reference of the drivers supply controller ($V_{refSC}$) should be slightly higher than the reference of the LDO ($V_{ref}$) in order to guarantee the functionality of the latter. This could result in a slightly smaller improvement of the power efficiency.

The example above is a basic voltage down-converter using two capacitor stages. However, the invention can be applied to voltage up-converters (as shown in Figure 1) and can be applied to different types of switched capacitor converter circuit. In particular, any switched capacitor circuit, preferably having series switches between the input and output, can be controlled in accordance with the invention so that the series on-resistance of one or more of those switches is controlled so that it can be used as a feedback control parameter for maintaining the output voltage constant.

Thus, the invention can be applied to all switching power converters in order to reduce the switching losses, particularly for applications for which switching frequency modulation is not desired. The invention can be used in on-chip and off-chip components as part of efficiency enhanced power management circuits. The power management circuits can be used to supply more complex mixed-signal circuits, resulting in an overall performance improvement (in terms of power consumption) of the product.

The invention allows the reduction of the switching losses in switching power converters, in applications where the modification of the switching frequency is not allowed while providing output voltage regulation. This results in a significant improvement of the power efficiency as the output current or the input voltage change, when compared to most conventional approaches.

The proposed invention can be used in combination with other control methods (series LDO, modularity, parallel LDO,...) in order to improve the resulting power efficiency and still keep the features of the other approaches.

Various modifications will be apparent to those skilled in the art.

**Claims**

1. A voltage converter comprising at least two capacitive stages, each comprising a capacitor (C1,C2) and a charging switch (MP1, MP2) through which a capacitor charging current is adapted to flow, and a control circuit (40,42,43) for controlling the charging switches,
wherein the voltage converter comprises a feedback control system for maintaining a desired output voltage, wherein the feedback control system controls the switch control voltage of at least one of the charging switches (MP1,MP2) thereby to vary the series resistance of the switch when turned on.

2. A converter as claimed in claim 1, wherein the charging switches (MP1,MP2) each comprise a transistor, and the switch control voltage comprises the gate voltage.

3. A converter as claimed in claim 1 or 2, wherein the feedback control system comprises a voltage generator (40) for generating at least one voltage rail (VNMOS, VPMOS), and a driver circuit (42) for generating switching gate voltages from the at least one voltage rail, wherein the at least one voltage rail is controlled in dependence on the output voltage.

4. A converter as claimed in claim 3, further comprising a logic circuit (43) for controlling which switching gate voltages are applied to the charging switches.

5. A converter as claimed in any preceding claim, wherein the feedback control system controls the switch control voltage of either the P type charging switches or the N type charging switches, by providing a variable voltage for turning on the controlled switches.

6. A converter as claimed in any one of claims 1 to 4, wherein the feedback control system controls the switch control voltage of each of the charging switches, with one variable voltage (VPMOS) for turning on P type switches and another variable voltage (VNMOS) for turning on N type switches.

7. A converter as claimed in claim 6, further comprising circuit configuration switches (MN3, MN5, MN4, MN6, MN7) for controlling the circuit configuration of the capacitors (C1,C2), wherein the feedback control system controls the switch control voltage of each of the charging switches and the circuit configuration switches.

8. A method of converting an input voltage to an output voltage using a voltage converter which comprises at least two capacitive stages, each comprising a capacitor (C1,C2) and a charging switch (MP1,MP2) through which a capacitor charging current is adapted to flow, and a control circuit (40,42,43) for controlling the charging switches, wherein the method comprises maintaining a desired output voltage using a feedback control system which controls the switch control voltage (VNMOS, VPOMS) of at least one of the charging switches thereby to vary the series resistance of the switch when turned on.

9. A method as claimed in claim 8, wherein the charging switches (MP1,MP2) each comprise a transistor, and the switch control voltage comprises the gate voltage.

10. A method as claimed in claim 8 or 9, comprising generating at least one voltage rail (VNMOS, VPOMS), and generating switching gate voltages from the at least one voltage rail, and controlling the at least one voltage rail in dependence on the output voltage.

11. A method as claimed in claim 10, further comprising controlling which switching gate voltages are applied to the charging switches.

12. A method as claimed in any one of claims 8 to 11, wherein the feedback control system controls the switch control voltage of either the P type charging switches or the N type charging switches, by providing a variable voltage for turning on the controlled switches.

13. A method as claimed in any one of claims 8 to 11, wherein the feedback control system controls the switch control voltage of each of the charging switches, with one variable voltage (VPMOS) for turning on P type switches and another variable voltage (VNMOS) for turning on N type switches.

14. A method as claimed in claim 13, wherein the voltage converter further comprises circuit configuration switches (MN3, MN5, MN4, MN6, MN7) for controlling the circuit configuration of the capacitors, wherein the feedback control system controls the switch control voltage of each of the charging switches and the circuit configuration switches.

15. A method as claimed in any one of claims 8 to 14, comprising performing a voltage down-conversion or up-conversion.

FIG.1

EP 2 385 615 A1

SC

$R_{out}$

Vo

$V_{in}$

$M \cdot V_{in}$

$I_o$

LOAD

FIG. 2

10

$V_{SC} > V_o$

12

$V_{in}$

$V_{SC}$

LDO

$V_o$

$I_o$

14

$V_{ref}$

FIG. 3

**Switched Capacitor
converter(SC)**

FIG. 4

FIG. 5

FIG. 6

FIG. 7

FIG. 8

FIG. 9

FIG. 10

Europäisches
Patentamt

European
Patent Office

Office européen
des brevets

# EUROPEAN SEARCH REPORT

**Application Number**

EP 10 16 2204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/157734 A1 (FENG WEI-WEN [TW] ET AL) 3 July 2008 (2008-07-03) | 1,2,5-9, 12-15 | INV. H02M3/07 |
| Y | * abstract * <br> * figures 1,2,4,5 * <br> * paragraphs [0008], [0049], [0050] * | 3,4,10, 11 | |
| X | US 2007/146050 A1 (CHEN TIEN-TZU [TW] ET AL) 28 June 2007 (2007-06-28) <br> * abstract * <br> * figures 1,4,5 * <br> * paragraphs [0006], [0009], [0023] - [0025], [0033], [0034] * | 1,2,5-9, 12-15 | |
| X | US 6 107 862 A (MUKAINAKANO HIROSHI [JP] ET AL) 22 August 2000 (2000-08-22) <br> * abstract * <br> * figures 1-3 * <br> * column 3, line 8 - line 18 * | 1,2,5-9, 12-15 | |
| X | US 6 657 875 B1 (ZENG JAMES S [US] ET AL) 2 December 2003 (2003-12-02) <br> * figures 1,5,7 * <br> * column 2, line 42 - line 44 * <br> * column 5, line 53 - line 58 * <br> * column 7, line 10 - line 16 * | 1,2,8,9 | **TECHNICAL FIELDS SEARCHED (IPC)** <br><br> H02M |
| X | EP 1 073 185 A2 (TEXAS INSTRUMENTS DEUTSCHLAND [DE]) 31 January 2001 (2001-01-31) <br> * abstract * <br> * paragraphs [0007], [0015], [0022], [0035] * <br> * claim 1 * <br> * figures 1,3 * | 1,2,8,9 | |

-/--

The present search report has been drawn up for all claims

| Place of search | Date of completion of the search | Examiner |
|---|---|---|
| The Hague | 14 June 2010 | Lund, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt
European
Patent Office
Office européen
des brevets

# EUROPEAN SEARCH REPORT

**Application Number**

EP 10 16 2204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 5 680 300 A (SZEPESI THOMAS S [US] ET AL) 21 October 1997 (1997-10-21)<br>* figures 2-4 *<br>* column 3, line 30 - line 40 *<br>* column 5, line 4 - line 17 *<br>----- | 3,4,10,11 | |
| A | US 6 359 797 B1 (BAYER ERICH [DE] ET AL) 19 March 2002 (2002-03-19)<br>* figure 3 *<br>* column 2, line 63 - column 3, line 6 *<br>* column 6, line 46 - line 53 *<br>* column 6, line 60 - line 66 *<br>* claim 1 *<br>----- | 3,4,10,11 | |

TECHNICAL FIELDS
SEARCHED      (IPC)

The present search report has been drawn up for all claims

| Place of search | Date of completion of the search | Examiner |
|---|---|---|
| The Hague | 14 June 2010 | Lund, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 16 2204

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2010

| Patent document cited in search report | | Publication date | Patent family member(s) | | Publication date |
|---|---|---|---|---|---|
| US 2008157734 | A1 | 03-07-2008 | NONE | | |
| US 2007146050 | A1 | 28-06-2007 | US | 2007146051 A1 | 28-06-2007 |
| US 6107862 | A | 22-08-2000 | DE | 69819576 D1 | 18-12-2003 |
| | | | DE | 69819576 T2 | 13-05-2004 |
| | | | EP | 0862260 A2 | 02-09-1998 |
| | | | JP | 2847646 B2 | 20-01-1999 |
| | | | JP | 10248240 A | 14-09-1998 |
| | | | TW | 382158 B | 11-02-2000 |
| US 6657875 | B1 | 02-12-2003 | US | 6920055 B1 | 19-07-2005 |
| EP 1073185 | A2 | 31-01-2001 | DE | 19935249 A1 | 08-02-2001 |
| | | | US | 6226193 B1 | 01-05-2001 |
| US 5680300 | A | 21-10-1997 | AU | 1523197 A | 17-07-1997 |
| | | | JP | 2000502558 T | 29-02-2000 |
| | | | WO | 9723944 A1 | 03-07-1997 |
| US 6359797 | B1 | 19-03-2002 | DE | 19931059 A1 | 18-01-2001 |
| | | | EP | 1067659 A2 | 10-01-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HOI LEE ; MOK, P.K.T.** A SC DC-DC converter with pseudo-continuous output regulation using a three-stage switchable opamp; Solid-State Circuits Conference, 2005. Digest of Technical Papers. *ISSCC. 2005 IEEE International,* 10 February 2005, vol. 1, 288-599